# EUROPÄISCHE PATENTSCHRIFT

(11) **EP 1 291 563 B1**
(45) Veröffentlichungstag und Bekanntmachung des Hinweises auf die Patenterteilung: **19.07.2006**
(21) Anmeldenummer: 02018813.2
(22) Anmeldetag: 23.08.2002
(51) Int. Cl.: F16K 15/08, F16K 15/14

(54) **Rückschlagventil sowie Ventil mit einem solchen Rückschlagventil**
Check valve and valve with such a check valve
Soupape non-retour et vanne avec une telle soupape non-retour

(30) Priorität: 05.09.2001 DE 10143433
(43) Veröffentlichungstag der Anmeldung: 12.03.2003
(73) Patentinhaber: HYDRAULIK-RING GMBH, 97828 Marktheidenfeld (DE)
(72) Erfinder: Cornea, Marius, 97816 Lohr/Main (DE); Lippert, Lorenz, 97737 Gemünden (DE); Weigand, Bernd, 97816 Lohr/Main (DE); Palesch, Edwin, 73525 Lenningen (DE); Sluka, Gerold, 72666 Neckartailfingen (DE)

(56) Entgegenhaltungen:
- EP-A- 0 069 531
- DE-A- 2 043 002
- FR-A- 525 481
- GB-A- 2 161 583
- US-A- 4 241 758

## Beschreibung

Die Erfindung betrifft ein Rückschlagventil nach dem Oberbegriff des Anspruches 1 sowie ein Ventil mit einem solchen integrierten Rückschlagventil nach dem Oberbegriff des Anspruches 9.

Rückschlagventile sind meist Einzelventile, deren Schließelement als Ventilkugel, Ventilkegel oder Ventilstift ausgebildet ist. Das Schließelement wird unter der Kraft einer Druckfeder gegen einen Ventilsitz gedrückt. Die Rückschlagventile sind häufig in axialer Richtung in Ventile eingebaut.

Aus der gattungsbildenden DE 2 043 002 A ist ein Druck- und Saugventil bekannt, bei dem das Schließelement als offener Ring gebildet ist.

Aus der EP 0 069 531 A ist ein bandförmiges Ringventilteil bekannt, dessen beide Enden Abstand voneinander haben. Um das Ventilteil in seiner Einbaulage zu halten, ist ein Haltestück erforderlich, das in einer Ventilkammer angeordnet wird und dafür sorgt, daß das Ventilteil in seiner Ventilposition gehalten wird.

Die US 4 241 758 zeigt ein bandförmiges Ventil, das im Bereich eines Steges offen ausgebildet ist. Der Krümmungsradius des Ventiles nimmt in Richtung auf einen Randstreifen stetig ab.

Die FR 525 481 zeigt ein Verschlußelement, das bandförmig und gebogen ausgebildet ist. Die Enden dieses Verschlußelementes haben Abstand voneinander.

Der Erfindung liegt die Aufgabe zugrunde, das gattungsgemäße Rückschlagventil und das gattungsgemäße Ventil so auszubilden, daß sie bei konstruktiv einfacher Ausbildung nur wenig Einbauraum in Anspruch nehmen und eine sichere Abdichtung gewährleisten.

Diese Aufgabe wird beim gattungsgemäßen Rückschlagventil erfindungsgemäß mit den kennzeichnenden Merkmalen des Anspruches 1 und beim gattungsgemäßen Ventil erfindungsgemäß mit den kennzeichnenden Merkmalen des Anspruches 9 gelöst.

Das Schließelement des erfindungsgemäßen Rückschlagventiles besteht aus einem gebogenen Ringband. Es nimmt nur wenig Einbauraum in Anspruch und kann in einem Ringkanal des erfindungsgemäßen Ventiles untergebracht werden. Das Schließelement bildet ein einfaches konstruktives Bauteil, das nicht nur einfach gefertigt, sondern darüber hinaus auch einfach und kostengünstig eingebaut werden kann. Vorteilhaft besteht das Ringband aus federndem Material, so daß es wenigstens teilweise selbst das Schließteil bilden kann. Es ist möglich, aus dem Band ein Schließteil teilweise auszustanzen, der über einen Federsteg an das Material des Bandes angebunden ist. In einem solchen Fall wird durch ein Schließteil die jeweilige Bohrung geöffnet und geschlossen. In der Ringnut kann das Band bequem und sicher untergebracht werden. Die einander überlappenden Bandenden gewährleisten eine sichere Funktion und eine gute Abdichtung.

Das erfindungsgemäße Ventil ist vorteilhaft ein Cartridgeventil, in welches das Rückschlagventil eingebaut ist. Das Ringband des erfindungsgemäßen Rückschlagventiles wirkt in radialer Richtung in der Ventilhülse, so daß das erfindungsgemäße Ventil in Axialrichtung nur geringe Länge haben kann.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: im Axialschnitt einen Teil eines erfindungsgemäßen Rückschlagventiles,
- Fig. 2: in einer Darstellung entsprechend Fig. 1 eine zweite Ausführungsform eines erfindungsgemäßen Rückschlagventils,
- Fig. 3: ein Schließelement des erfindungsgemäßen Rückschlagventils in Ansicht,
- Fig. 4: das Schließelement gemäß Fig. 3 in Seitenansicht,
- Fig. 5 und Fig. 6: in Darstellungen entsprechend den Fig. 3 und 4 eine zweite Ausführungsform eines Schließelementes.

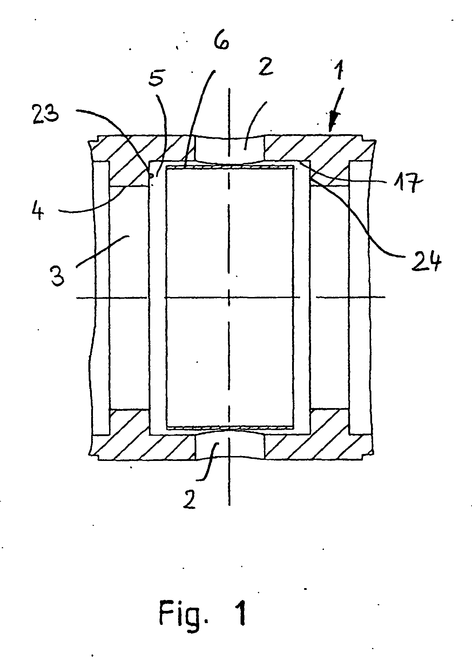

Fig. 1 zeigt eine zylindrische Hülse 1 eines Schalt- oder Proportionalventils. Da solche Ventile bekannt sind, werden sie im folgenden auch nicht näher beschrieben. Die Hülse 1 weist über ihren Umfang verteilt mehrere Bohrungen 2 auf, durch welche Hydraulikmedium in eine zentrale Bohrung 3 der Hülse 1 strömen kann. In der Innenwandung 4 der Hülse 1 befindet sich eine Ringnut 5, in welche die Bohrungen 2 münden.

Die Bohrungen 2 können mit einem Schließelement 6 geschlossen werden, das aus einem ringförmig gerollten Band besteht. Die axiale Breite des Schließelementes 6 ist geringfügig kleiner als die axiale Breite der Ringnut 5, die verhältnismäßig geringe radiale Tiefe hat. Der Durchmesser des Schließelementes 6 kann in noch zu beschreibender Weise zum Schließen oder Öffnen der Bohrungen 2 vergrö-βert oder verkleinert werden.

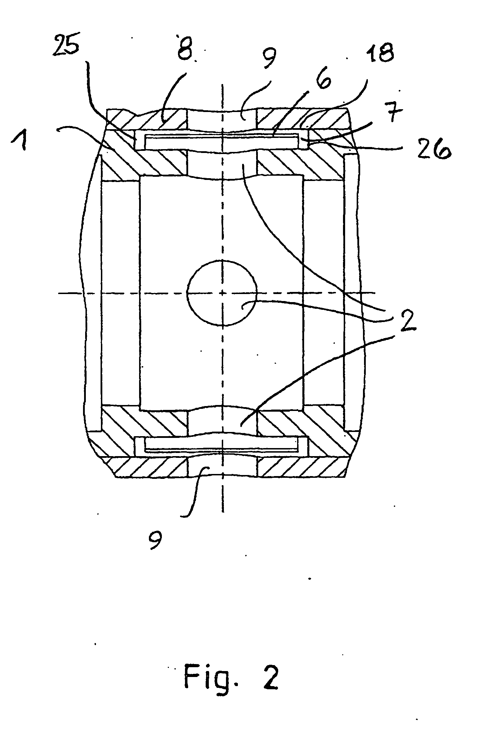

Fig. 2 zeigt ein Rückschlagventil, dessen Schließelement 6 in einer Ringnut 7 liegt, die an der Außenseite der Ventilhülse 1 vorgesehen ist. Zur Radialsicherung dient eine zusätzliche Hülse 8, die auf der Ventilhülse 1 sitzt. Die zusätzliche Hülse 8 hat Bohrungen 9, die vorteilhaft mit den Bohrungen 2 in der Ventilhülse 1 fluchten.

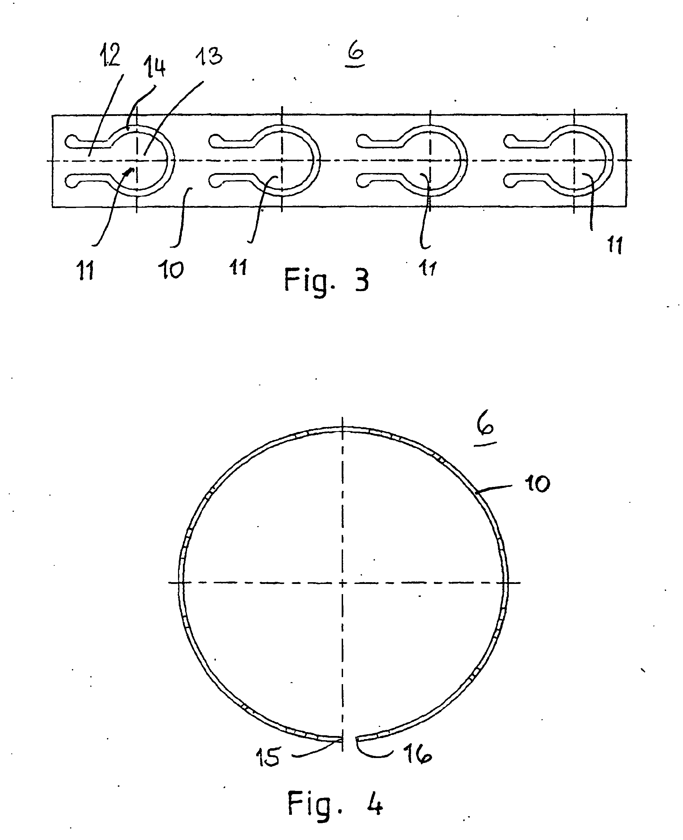

Die Fig. 3 und 4 zeigen eine erste Ausführungsform des Schließelementes 6. Es wird durch ein streifenförmiges Band 10 mit rechteckigem Umriß gebildet, das zur Bildung des Schließelementes 6 in eine Ringform gebogen wird. Aus dem Band 10 sind einzelne federnde Klappen 11 teilweise herausgestanzt, mit denen die entsprechenden Bohrungen 2 in der Ventilhülse 1 geschlossen werden können. Wie Fig. 3 zeigt, liegen die Klappen 11 in Längsrichtung des Bandes 10 mit Abstand hintereinander. Die Klappen 11 sind vorteilhaft gleich ausgebildet und haben einen in halber Breite des Bandes 10 liegenden Fuß 12, der in einen kreisförmigen Schließteil 13 übergeht. Über den Fuß 12 ist die Klappe 11 an das Material des Bandes 10 angeschlossen. Damit die Klappe 11 zum Schließen und Öffnen der Bohrungen 2 die erforderlichen Bewegungen ausführen kann, sind der Fuß 12 und der Schließteil 13 durch einen Spalt 14 vom Restmaterial des Bandes 10 getrennt.

Das Band 10 wird, wie sich aus Fig. 4 ergibt, zu einem Ring gebogen. Die beiden Bandenden 15, 16 liegen mit geringem Abstand voneinander. Das gebogene Band 10 wird so in die Ventilhülse eingebaut, daß die Klappen 11 in Höhe der Bohrungen 2 liegen. Da die Klappen 11 durch den Spalte 14 vom Restmaterial des Bandes 10 getrennt sind, werden beim Biegevorgang des Bandes 10 die federnden Klappen 11 nicht oder nicht in gleichem Maße gebogen. Dies hat zur Folge, daß die Klappen 11 unter Vorspannung so an der Ventilhülse 1 anliegen, daß der Schließteil 13 der Klappen 11 die Bohrungen 2 verschließt.

Es ist auch möglich, die Klappen 11 aus dem gebogenen Band 10 so weit herauszubiegen, daß sie mit der für den jeweiligen Einsatzfall notwendigen Federkraft an der Ventilhülse 1 anliegen.

Es ist schließlich auch möglich, die Klappen 11 in gleichem Maße wie das Band 10 zu biegen, so daß die Klappen 11 nicht über das Band 10 vorstehen. In diesem Falle liegt das gesamte Band unter Vorspannung am Boden 17 der Ringnut 5 (Fig. 1) oder an der Innenseite 18 der zusätzlichen Hülse 8 (Fig. 2) an. In diesem Falle verschließen die Klappen 11 die Bohrungen 9 in der zusätzlichen Hülse 8.

Übersteigt der Druck des an den Bohrungen 2 bzw. 9 anstehenden Hydraulikmediums die Federkraft der Klappen 11 bzw. des gesamten Schließelementes 6, werden die Klappen 11 elastisch in die Freigabestellung gebogen, so daß das Hydraulikmedium durch die nunmehr geöffneten Bohrungen 2 bzw. 9 strömen kann. Sobald die Federkraft der Klappen 11 wieder größer ist als der Druck des Hydraulikmediums, federn die Klappen 11 in ihre Schließstellung zurück.

Das Schließelement 6 kann auch aus einem Band 10 bestehen, das keine federnden Klappen 11 aufweist. In diesem Falle bildet das Schließelement 6 gleichzeitig ein Federelement, das zum Öffnen und Schließen der Bohrungen 2 bzw. 9 im Durchmesser elastisch aufgeweitet bzw. verringert wird. In der einen Stellung werden die Bohrungen 2 bzw. 9 verschlossen, während sie in der anderen Stellung freigegeben werden. Die Federkraft des zu einem Ring gebogenen Bandes 10 ist an den jeweiligen Einsatzfall des Ventils angepaßt. Die Federkraft wird so gewählt, daß die Bohrungen 2, 9 bei einem vorgegebenen Druck des Hydraulikmediums freigegeben werden, indem der Durchmesser des Schließelementes vergrößert oder verringert wird.

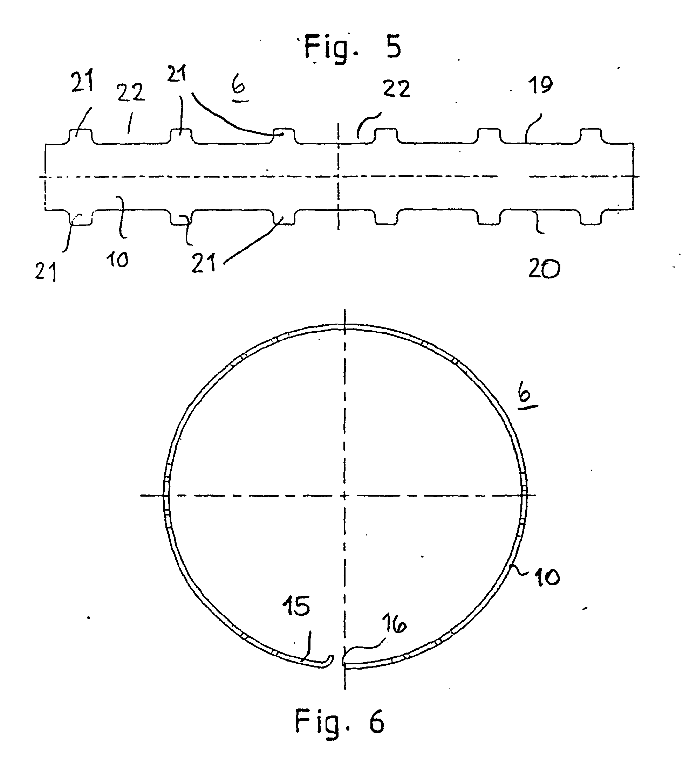

Die Fig. 5 und 6 zeigen eine Ausführungsform, bei der das Band 10 keine teilweise ausgestanzten Klappen 11 aufweist. Statt dessen ist das rechteckige streifenförmige Band 10 an seinen beiden Längsseiten 19, 20 mit Vorsprüngen 21 versehen, die mit Abstand längs der Längsseiten 19, 20 vorgesehen sind. Vorteilhaft liegen die Vorsprünge 21 mit gleichem Abstand hintereinander. Die an den beiden Längsseiten 19, 20 vorgesehenen Vorsprünge 21 liegen vorteilhaft auf gleicher Höhe. Zwischen den Vorsprüngen 21 werden Freiräume 22 gebildet.

Das Band 10 wird, wie sich aus Fig. 6 ergibt, wiederum zu einem Ring gebogen und in das jeweilige Ventil in gebogenem Zustand eingesetzt. Die Vorsprünge 21 dienen in der Einbaulage des Schließelementes 6 als seitliche Anschläge, mit denen sie an den Seitenwänden 23, 24 der Ringnut 5 (Fig. 1) bzw. an den Seitenwänden 25, 26 der Ringnut 7 (Fig. 2) zur Anlage kommen. Das gesamte Band 10 dient in diesem Falle als Schließelement, mit dem die Bohrungen 2, 9 freigegeben bzw. geschlossen werden können. Je nach Druck im Hydraulikmedium wird der Durchmesser des Schließelementes 6 vergrößert bzw. verkleinert.

Im Unterschied zur Ausführungsform nach den Fig. 3 und 4 ist das eine Ende 15 des Bandes 10 radial nach innen abgebogen (Fig. 6). Die beiden Enden 15, 16 des Bandes 10 können, wie in Fig. 6 dargestellt, in der Einbaulage in bekannter weise Abstand voneinander haben. Die Enden 15, 16 überlappen aber einander. Dadurch ist eine sichere Funktion des Schließelementes 6 während dessen Einsatzdauer sichergestellt und eine gute Abdichtung, auch wenn die Enden des Bandes über einer Bohrung liegen. Auch bei der Ausführungsform nach den Fig. 3 und 4 überlappen die Enden 15, 16 des Bandes 10 einander.

Abweichend vom dargestellten Ausführungsbeispiel kann das Band 10 auch lediglich aus einem rechteckigen Streifen ohne Vorsprünge 21 gebildet sein. Auch in diesem Falle bildet das Band 10 im ringförmig gebogenen Zustand sowohl das Schließelement als auch das Federelement.

In den beschriebenen Fällen federt der Ring in eine Grundposition zurück, in welcher er an der Ventilhülse 1 (Fig. 1) oder an der zusätzlichen Hülse 8 (Fig. 2) unter seiner Vorspannkraft anliegen kann. Es ist aber auch möglich, das Schließelement 6 so auszubilden, daß es in seiner Ausgangslage schwebend in der jeweiligen Ringnut 5, 7 liegt.

Das Schließelement 6 wird in den beschriebenen Ausführungsbeispielen durch ein Federband gebildet, das zu einem Ring gebogen wird, dessen beide Enden 15, 16 in bekannter weise mit Abstand voneinander liegen. Dadurch kann der Ring zuverlässig in die Schließ- bzw. in die Freigabelage elastisch verformt werden.

Die Bohrungen 2, 9 haben vorteilhaft kreisförmigen Umriß. Die Dichtkante ist dementsprechend kreisförmig ausgebildet.

Mit dem Schließelement 6 können alle Bohrungen 2, 9 am Umfang des Ventils verschlossen oder geöffnet werden. Das Schließelement 6 kann aber auch so ausgebildet sein, daß es nur eine oder nur einen Teil der Bohrungen schließen oder freigeben kann.

Da das Schließelement aus einem Band 10, vorzugsweise einem Federband, hergestellt wird, nimmt es in der Einbaulage nur wenig Raum in Anspruch. Das Schließelement 6 kann darum in der Ringnut 5, 7 des Ventils bequem untergebracht werden, die nur geringe radiale Tiefe aufweist. Das Schließelement 6 kann im P-, T-, A- oder B-Kanal untergebracht werden, vorzugsweise im Druckkanal P, der durch eine entsprechende Ringnut des Ventils gebildet ist.

Das beschriebene Rückschlagventil kann auch in Schieberbohrungen von Steuerblöcken eingebaut werden, die vorzugsweise bei Nockenwellenverstellern eingesetzt werden.

Das Schließelement 6 kann in der Einbaulage durch eine (nicht dargestellte) Verdrehsicherung gegen Drehen gesichert sein. Die Verdrehsicherung kann beispielsweise durch einen Stift, eine Ausklinkung und dergleichen gebildet sein.

## Patentansprüche

1. Rückschlagventil mit wenigstens einem aus einem zu einem Ring gebogenen Band (10) gebildeten, elastisch verformbaren Schließelement, mit dem wenigstens eine Bohrung verschließbar ist,
**dadurch gekennzeichnet, daß** das Schließelement (6) in einem Ringkanal (5, 7) untergebracht ist, in den wenigstens eine Bohrung (2, 9) mündet, und daß die Enden (15, 16) des Bandes (10) in der Einbaulage einander überlappen.

2. Rückschlagventil nach Anspruch 1,
**dadurch gekennzeichnet, daß** das, vorteilhaft im wesentlichen rechteckigen Umriß aufweisende Band (10) aus Federstahl besteht.

3. Rückschlagventil nach Ansprüch 1 oder 2,
**dadurch gekennzeichnet, daß** zumindest ein Ende (15) des Bandes (10) nach innen gebogen ist.

4. Rückschlagventil nach einem der Ansprüche 1 bis 3,
**dadurch gekennzeichnet, daß** das Ringband (10) wenigstens ein, vorzugsweise mehrere Schließteile (13) aufweist.

5. Rückschlagventil nach Anspruch 4,
**dadurch gekennzeichnet, daß** der vorteilhaft über einen Federsteg (12) an das Ringband (10) angebundene Schließteil (13) durch einen Spalt (14) vom Ringband (10) getrennt ist.

6. Rückschlagventil nach Anspruch 5,
**dadurch gekennzeichnet, daß** der Federsteg (12) durch den Spalt (14) teilweise vom Ringband (10) getrennt ist.

7. Rückschlagventil nach einem der Ansprüche 4 bis 6,
**dadurch gekennzeichnet, daß** der Schließteil (13) und der Federsteg (12) symmetrisch zur Längsmittelebene des Ringbandes (10) liegen.

8. Rückschlagventil nach einem der Ansprüche 1 bis 7,
**dadurch gekennzeichnet, daß** das Ringband (10) an wenigstens einer, vorzugsweise an beiden Längsseiten (19, 20) wenigstens einen, vorzugsweise mehrere Vorsprünge (21) aufweist.

9. Ventil mit wenigstens einem integrierten Rückschlagventil nach einem der Ansprüche 1 bis 8,
**dadurch gekennzeichnet, daß** das Rückschlagventil in einem Ringkanal (5, 7) des Ventils untergebracht ist, in den wenigstens eine Bohrung (2, 9) mündet.

10. Ventil nach Anspruch 9,
**dadurch gekennzeichnet, daß** der vorteilhaft mit einem Druck-, einem Tank- oder einem Arbeitsanschluß (P, T, A, B) verbundene Ringkanal (5, 7) in einer Hülse (1) des Ventils untergebracht ist.

11. Ventil nach Anspruch 9 oder 10,
**dadurch gekennzeichnet, daß** das Ringband (10) des Rückschlagventils im Ringkanal (5, 7) liegt, dessen Breite vorteilhaft größer ist als die Breite des Ringbandes (10).

12. Ventil nach einem der Ansprüche 9 bis 11,
**dadurch gekennzeichnet, daß** der Ringkanal (5) in der Innenwandung (4) der Hülse (1) vorgesehen ist

13. Ventil nach einem der Ansprüche 9 bis 12,
**dadurch gekennzeichnet, daß** der Ringkanal (7) in der Außenwandung der Hülse (1) vorgesehen ist und vorteilhaft durch eine zusätzliche Hülse (8) radial nach außen geschlossen ist, welche die Ventilhülse (1) umgibt.

14. Ventil nach einem der Ansprüche 9 bis 13,
**dadurch gekennzeichnet, daß** das Ringband (10), vorteilhaft unter elastischer Vorspannung an der Hülse (1, 8) anliegt.

15. Ventil nach einem der Ansprüche 9 bis 14,
**dadurch gekennzeichnet, daß** das Ringband (10) in einer Ausgangslage schwebend angeordnet ist.

16. Ventil nach einem der Ansprüche 9 bis 15,
**dadurch gekennzeichnet, daß** das Ringband (10) gegen Verdrehen um seine Achse gesichert ist.

## Claims

1. A check valve having at least one elastically deformable closing element made from a band (10) that has been bent into a ring, and that is closable with at least one drill hole,
**characterised in that**
the closing element (6) is accommodated in an annular channel (5, 7) into which at least one drill hole (2, 9) opens, and that the ends (15, 16) of the band (10) overlap one another in the installed position.

2. The check valve in accordance with claim 1,
**characterised in that**
the band (10) that advantageously has an essentially rectangular contour is made from spring steel.

3. The check valve in accordance with either of claims 1 or 2,
**characterised in that**
at least one end (15) of the band (10) is curved inwards.

4. The check valve in accordance with any of claims 1 to 3,
**characterised in that**
the annular band (10) includes at least one, preferably multiple closure elements (13).

5. The check valve in accordance with claim 4,
**characterised in that**
the closure element (13) that is advantageously attached to the annular band (10) via a spring bar (12) is partially separated from the annular band (10) by gap (14).

6. The check valve in accordance with claim 5,
**characterised in that**
the spring bar (12) is partially separated from the annular band (10) by the gap (14).

7. The check valve in accordance with any of claims 4 to 6,
**characterised in that**
the closure element (13) and the spring bar (12) are disposed symmetrically about the longitudinal midplane of the annular band (10).

8. The check valve in accordance with any of claims 1 to 7,
**characterised in that**
the annular band (10) is furnished with one, preferably several protrusions (21) on at least one, preferably both longitudinal sides (19, 20) thereof.

9. A valve having at least one integrated check valve in accordance with any of claims 1 to 8,
**characterised in that**
the check valve is situated in an annular channel (5, 7) of the valve, into which at least one drill hole (2, 9) opens.

10. The valve in accordance with claim 9,
**characterised in that**
the annular channel (5, 7), which is advantageously connected to a pressure, tank, or work connection (P, T, A, B), is accommodated in a sleeve (1) of the valve.

11. The valve in accordance with either of claims 9 or 10,
**characterised in that**
the annular band (10) of the check valve is situated in the annular channel (5, 7), the width of which is advantageously greater than the width of the annular band (10).

12. The valve in accordance with any of claims 9 to 11,
**characterised in that**
the annular channel (5) is provided in the inner wall (4) of the sleeve (1).

13. The valve in accordance with any of claims 9 to 12,
**characterised in that**
the annular channel (7) is provided in the outer wall of the sleeve (1) and is advantageously surrounded radially outwardly by an additional sleeve (8), which encloses the valve sleeve (1).

14. The valve in accordance with any of claims 9 to 13,
**characterised in that**
the annular band (10) lies flush against the sleeve (1, 8), advantageously under elastic pretensioning.

15. The valve in accordance with any of claims 9 to 14,
**characterised in that**
in an initial position the annular band (10) is arranged in floating manner.

16. The valve in accordance with any of claims 9 to 15,
**characterised in that**
the annular band (10) is secured against distortion about its axis.

## Revendications

1. Clapet de non-retour ayant au moins un élément de fermeture élastiquement déformable formé d'une bande (10) pliée en un anneau, avec lequel au moins un alésage peut être fermé,
**caractérisé en ce que** l'élément de fermeture (6) est logé dans un canal annulaire (5, 7), dans lequel débouche au moins un alésage (2, 9) et **en ce que** les extrémités (15, 16) de la bande (10) se chevauchent mutuellement dans la position de montage.

2. Clapet de non-retour selon la revendication 1,
**caractérisé en ce que** la bande (10) présentant avantageusement un profil rectangulaire, est constituée d'acier à ressort.

3. Clapet de non-retour selon la revendication 1 ou 2,
**caractérisé en ce qu'**au moins une extrémité (15) de la bande (10) est pliée vers l'intérieur.

4. Clapet de non-retour selon l'une quelconque des revendications 1 à 3,
**caractérisé en ce que** la bande annulaire (10) présente au moins une pièce, de préférence plusieurs pièces de fermeture (13).

5. Clapet de non-retour selon la revendication 4,
**caractérisé en ce que** la pièce de fermeture (13) attachée avantageusement à la bande annulaire (10) par l'intermédiaire d'une lame élastique (12), est séparée de la bande annulaire (10) par une fente (14).

6. Clapet de non-retour selon la revendication 5,
**caractérisé en ce que** la lame élastique (12) est séparée partiellement de la bande annulaire (10) par la fente (14).

7. Clapet de non-retour selon l'une quelconque des revendications 4 à 6,
**caractérisé en ce que** la pièce de fermeture (13) et la lame élastique (12) se trouvent symétriquement par rapport au plan médian longitudinal de la bande annulaire (10).

8. Clapet de non-retour selon l'une quelconque des revendications 1 à 7,
**caractérisé en ce que** la bande annulaire (10) présente au moins une projection, de préférence au moins une projection sur les deux côtés longitudinaux (19, 20), de préférence plusieurs projections (21).

9. Soupape avec au moins un clapet de non-retour intégré, selon l'une quelconque des revendications 1 à 8,
**caractérisée en ce que** le clapet de non-retour est logé dans un canal annulaire (5, 7) de la soupape, dans lequel débouche au moins un alésage (2, 9).

10. Soupape selon la revendication 9,
**caractérisée en ce que** le canal annulaire (5, 7) relié avantageusement à un raccord de pression, un raccord de cuve ou un raccord de travail (P, T, A, B) est logé dans un manchon (1) de la soupape.

11. Soupape selon la revendication 9 ou 10,
**caractérisée en ce que** la bande annulaire (10) du clapet de non-retour se trouve dans le canal annulaire (5, 7) dont la largeur est avantageusement supérieure à la largeur de la bande annulaire (10).

12. Soupape selon l'une quelconque des revendications 9 à 11,
**caractérisée en ce que** le canal annulaire (5) est prévu dans la paroi interne (4) du manchon (1).

13. Soupape selon l'une quelconque des revendications 9 à 12,
**caractérisée en ce que** le canal annulaire (7) est prévu dans la paroi externe du manchon (1) et fermé radialement vers l'extérieur, avantageusement par un manchon supplémentaire (8), qui entoure le manchon de soupape (1).

14. Soupape selon l'une quelconque des revendications 9 à 13,
**caractérisée en ce que** la bande annulaire (10) est plaquée avantageusement contre le manchon (1, 8) avec une précontrainte élastique.

15. Soupape selon l'une quelconque des revendications 9 à 14,
**caractérisée en ce que** la bande annulaire (10) est disposée de façon flottante dans une position de repos.

16. Soupape selon l'une quelconque des revendications 9 à 15,
**caractérisée en ce que** la bande annulaire (10) est bloquée contre une rotation autour de son axe.
